(19) Europäisches Patentamt / European Patent Office / Office européen des brevets

(11) **EP 1 815 223 B1**

(12) **FASCICULE DE BREVET EUROPEEN**

(45) Date de publication et mention
de la délivrance du brevet:
**10.04.2013 Bulletin 2013/15**

(51) Int Cl.:
*G01M 15/08* (2006.01)     *F02D 35/02* (2006.01)
*G01L 23/08* (2006.01)

(21) Numéro de dépôt: **05819400.2**

(22) Date de dépôt: **18.11.2005**

(86) Numéro de dépôt international:
**PCT/FR2005/050965**

(87) Numéro de publication internationale:
**WO 2006/054029 (26.05.2006 Gazette 2006/21)**

(54) **DISPOSITIF DE COMMANDE D'UN MOTEUR A COMBUSTION INTERNE**

VORRICHTUNG ZUR STEUERUNG EINES VERBRENNUNGSMOTORS

DEVICE FOR CONTROLLING AN INTERNAL COMBUSTION ENGINE

(84) Etats contractants désignés:
**AT BE BG CH CY CZ DE DK EE ES FI FR GB GR
HU IE IS IT LI LT LU LV MC NL PL PT RO SE SI
SK TR**

(30) Priorité: **18.11.2004 FR 0412252**

(43) Date de publication de la demande:
**08.08.2007 Bulletin 2007/32**

(73) Titulaire: **Renault s.a.s.
92100 Boulogne Billancourt (FR)**

(72) Inventeurs:
• **CORDESSES, Lionel
F-78140 VÉLIZY VILLACOUBLAY (FR)**
• **MARTINEZ, Didier
F-78920 ECQUEVILLY (FR)**

(74) Mandataire: **Rougemont, Bernard et al
Renault Technocentre
Département Propriété Intellectuelle
Sce 00267 TCR GRA 2 36
1 Avenue du Golf
78288 Guyancourt Cedex (FR)**

(56) Documents cités:
**FR-A- 2 385 100         US-A- 2 931 901
US-A- 3 654 563         US-A- 4 035 734
US-A1- 2003 010 101**

**EP 1 815 223 B1**

**Description**

L'invention se rapporte à un dispositif de commande d'un moteur à combustion interne.

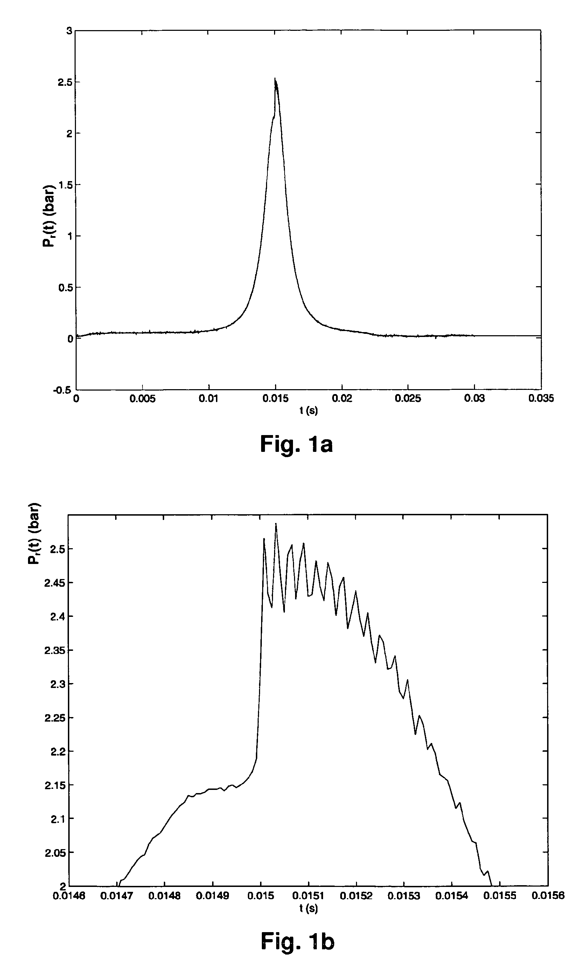

Dans le domaine des moteurs automobiles, il est important de pouvoir commander de manière précise la phase de combustion du cycle thermodynamique de ces moteurs. Pour cela, il est usuel de mesurer la pression régnant dans la chambre de combustion et de déterminer à partir de cette mesure un certain nombre de grandeurs caractéristiques, notamment des grandeurs utilisables pour la commande par asservissement du moteur. Ces grandeurs sont par exemple la date de début de combustion, la puissance d'émission sonore du moteur, ou la puissance fournie par le moteur. Cependant le signal de pression qui est obtenu par mesure dans une chambre de combustion n'est pas exploitable sans traitement préalable car il présente des bruits de mesure sous forme d'oscillations parasites. Un exemple de tel signal p(t) de pression brute mesuré dans une chambre de combustion d'un moteur automobile est représenté en fonction du temps sur la figure 1A, la figure 1B étant un détail grossi du signal représenté à la figure 1A, détail correspondant au début de la combustion. Les oscillations que présente un tel signal ne correspondent pas à des variations de la pression dans la chambre de combustion mais sont dues à des oscillations mécaniques parasites. Le signal de mesure de pression doit donc être filtré avant de pouvoir être utilisé pour la détermination des grandeurs utiles pour un asservissement.

Des solutions simples par filtrage linéaire permettent de réduire les composantes oscillatoires indésirables dans le signal de pression. Toutefois ce type de filtrage a l'inconvénient d'atténuer également la composante fréquentielle, située aux environs de 10kHz, qui correspond à une brusque augmentation de la pression au début de la combustion (sur la figure 1a ou 1b, cette brusque augmentation se produit vers t=0,015). Une détection précise du début de la combustion n'est donc notamment pas possible avec une telle méthode.

D'autres solutions connues reposent sur l'emploi de transformées en ondelettes. Ainsi la demande de brevet US 2003 / 0 145 829 A1 décrit un procédé permettant de détecter le début de la combustion dans une chambre de combustion à partir de la mesure de la pression régnant dans cette chambre. Le signal de pression est filtré par application d'une transformée en ondelettes. Le début de la combustion est détecté par analyse des coefficients d'ondelettes ainsi obtenus, en ce qu'elle se traduit par un saut brusque de la valeur absolue des coefficients d'ondelettes.

Par ailleurs la demande de brevet EP 1 209 458 A1 décrit un procédé de détermination du niveau de bruit relatif au bruit de combustion d'un moteur à combustion interne. Le signal de pression mesuré est également filtré par transformée en ondelettes. L'énergie du signal temporel de départ, peut, sur la base du théorème de Parseval, être estimée à partir des coefficients d'ondelettes obtenus et il est possible d'en déduire le niveau de bruit. Ce niveau de bruit peut être utilisé en tant que grandeur d'asservissement pour un module de commande de la combustion du moteur.

Toutefois ces procédés n'apportent que des solutions partielles au problème de la détermination des grandeurs nécessaire à la commande de la combustion. Ces procédés ne permettent notamment pas de calculer directement et précisément le dégagement d'énergie apparent, tel qu'il est défini par la relation suivante

$$\left.\frac{dQ}{dt}\right|_t = \frac{1}{\gamma-1}V(t)\left.\frac{dP}{dt}\right|_t + \frac{\gamma}{\gamma-1}P(t)\left.\frac{dV}{dt}\right|_t \tag{1}$$

où $\gamma$ est le rapport des chaleurs spécifiques des gaz de combustion (rapport de la chaleur spécifique à pression constante et de la chaleur spécifique à volume constant), V(t) le volume de la chambre de combustion, P(t) la pression régnant dans la chambre de combustion et t le temps. Dans ce but il est donc nécessaire, le volume de la chambre de combustion étant connu, de pouvoir déterminer la pression instantanée régnant effectivement dans la chambre de combustion ainsi que la dérivée par rapport au temps de cette pression et donc de réduire fortement ou supprimer les oscillations parasites contenues dans le signal de mesure de pression usuellement disponible.

La demande de brevet français FR 04 07060 décrit elle un procédé de traitement d'un signal de mesure de pression d'une chambre de combustion d'un moteur à combustion interne utilisant une technique de filtrage à base d'ondelettes ainsi que des fonctions non linéaires de filtrage et permettant de restituer un signal de pression filtré qui est adapté pour la détermination de grandeurs telles que le dégagement apparent d'énergie ou la date de début de combustion. Ce procédé suppose toutefois un mode de réalisation à base de processeur numérique, de type DSP ou à base d'ASIC (circuit intégré à application spécifique). En conséquence, il s'agit là d'un mode de réalisation relativement coûteux.

US 2003/0010101 décrit un dispositif de commande d'un moteur à combution interne comprenant un capteur de pression et des moyen de filtrage du signal de mesure. US 3654563, US 4035734, US 2931901 et FR 2385100 décrivent des moyens de filtrage en boucle fermée. L'invention a donc pour but de fournir un dispositif de traitement d'un signal de mesure de pression de chambre de combustion, ne présentant pas les inconvénients des solutions antérieures qui viennent d'être décrites, permettant de restituer un signal de pression filtré qui est adapté pour la détermination de grandeurs telles que le dégagement apparent d'énergie ou la date de début de combustion et qui présente en outre un faible coût de réalisation.

Ce problème est résolu selon l'invention par un dispositif de commande d'un moteur à combustion interne comportant des moyens de génération d'un signal de commande du moteur à combustion interne, un capteur pour la fourniture d'un signal de mesure de pression d'une chambre de combustion du moteur à combustion interne et un dispositif de filtrage permettant de générer un signal de pression filtré, ledit dispositif de filtrage étant réalisé à partir de composants électroniques analogiques caractérisé en ce que le dispositif de filtrage présente une configuration en boucle fermée avec une partie directe et une partie de retour, la partie de retour comprenant un module de réinjection dudit signal de pression filtré et la partie directe de la boucle comprenant :

- un premier module soustracteur générant la différence entre ledit signal de mesure de pression et la sortie dudit module de réinjection,
- un module non linéaire statique en sortie dudit module soustracteur,
- un module intégrateur générant ledit signal de pression filtré par intégration à partir de la sortie dudit module non linéaire,

le dispositif comprenant en outre,

- un deuxième module soustracteur générant la différence entre ledit signal de mesure de pression et ledit signal de pression filtré,
- un module de filtrage passe bas en sortie dudit deuxième module soustracteur,
- un module additionneur générant un signal de pression filtré corrigé sous la forme de la somme entre ledit signal de pression filtré et la sortie dudit module de filtrage passe bas.

Le dispositif selon l'invention peut en outre présenter une ou plusieurs des caractéristiques avantageuses suivantes :

- le signal à l'entrée du module intégrateur est, à un gain multiplicatif près, le signal correspondant à la dérivée temporelle du signal de pression filtré;
- le dispositif comprend au moins un module multiplicateur permettant de régler le gain appliqué audit signal de pression filtré avant réinjection;
- la fonction réalisée par ledit module non linéaire est une fonction de seuillage doux ou dur;
- ledit module non linéaire est réalisé à partir d'au moins une résistance et d'au moins deux diodes connectées tête-bêche et en parallèle;
- ledit premier module soustracteur ou le deuxième module soustracteur ou le module additionneur est réalisé à partir d'un amplificateur opérationnel et d'au moins une résistance;
- ledit module intégrateur est réalisé à partir d'au moins une résistance et une capacité;
- ledit module de filtrage passe-bas est réalisé à partir d'au moins une résistance et une capacité.

D'autres caractéristiques et avantages de l'invention apparaîtront à la lumière de la description détaillée qui va suivre. Dans les dessins auxquels il est fait référence :

- la figure 1a, déjà décrite, représente un exemple de signal de pression mesuré dans une chambre de combustion,
- la figure 1b, déjà décrite, représente un détail du signal représenté en figure 1 a,
- la figure 2a représente un schéma-bloc d'un premier exemple de mise en oeuvre du dispositif de filtrage d'un dispositif de commande d'un moteur,
- la figure 2b représente un schéma-bloc d'un deuxième exemple de mise en oeuvre du dispositif de filtrage du dispositif de commande d'un moteur, ledit deuxième mode de réalisation correspondant à l'invention,
- les figures 3a à 3d représentent des exemples de mise en oeuvre de différents modules du dispositif de filtrage du dispositif de commande d'un moteur selon l'invention,
- la figure 4 représente l'allure de la fonction réalisée par le module de la figure 3b,
- la figure 5 représente un schéma-bloc du dispositif de commande d'un moteur de l'invention par asservissement,
- la figure 6 représente l'allure du signal de pression avec et sans application du filtrage selon l'invention,
- la figure 7 représente l'allure de la dérivée du signal de pression de la figure 6 avec et sans application au signal de pression du filtrage selon l'invention.

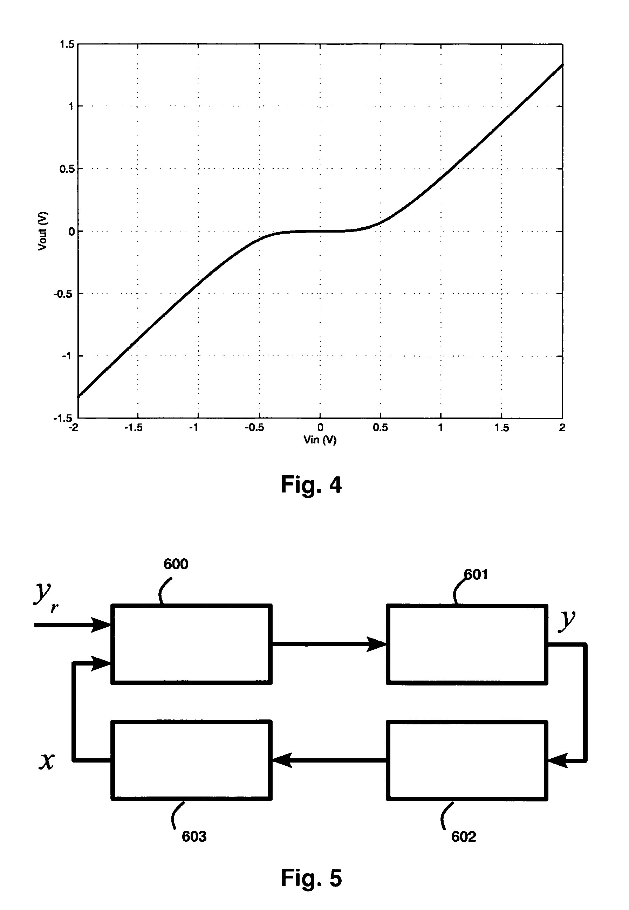

La figure 5 représente un dispositif de commande d'un moteur 601 commandé par un bloc 600 correspondant à des moyens de commande du moteur 601 générant un signal Com de commande. La pression régnant dans la chambre de combustion du moteur est mesurée par un capteur 602. Le signal analogique y généré par le capteur est transmis à un dispositif de filtrage 603 selon l'invention. Les moyens de commande 600 sont typiquement mis en oeuvre en tant que moyens de calcul d'un calculateur du véhicule automobile destiné à la commande de la combustion du moteur du véhicule. Dans ce cas, les signaux issus du dispositif de filtrage 603 sont numérisés avant injection dans le module de commande 600.

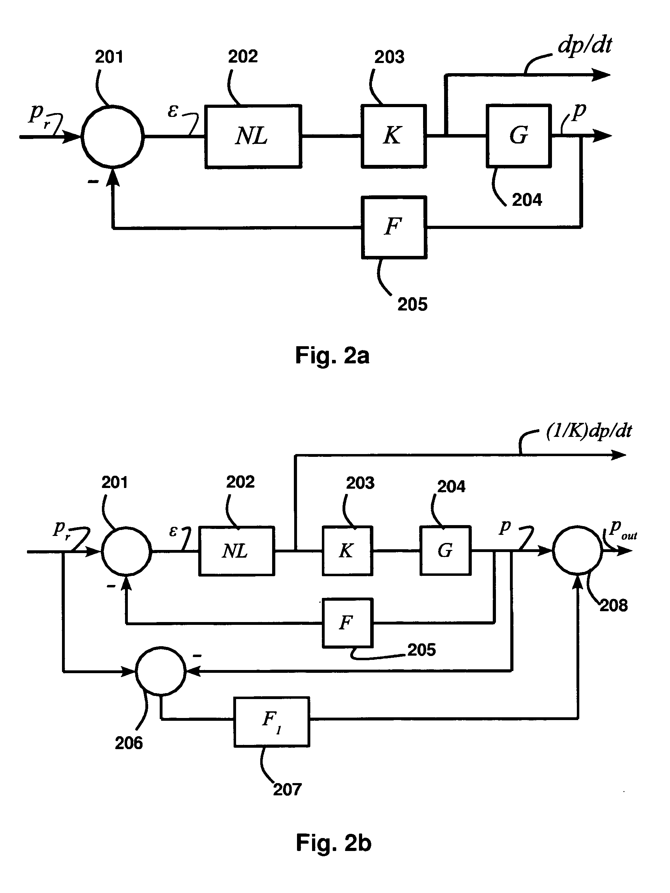

La figure 2a représente un schéma-bloc d'un premier exemple de mise en oeuvre du dispositif de filtrage du dispositif de commande. Comme cela va être décrit plus en détail, chacun des modules utilisés est réalisé à partir de composants électroniques analogiques. Le dispositif de filtrage comprend une configuration en boucle fermée, avec au moins une branche directe de filtrage et au moins une branche de retour permettant la réinjection du signal de pression filtré. En entrée du dispositif de filtrage est présent le signal brut de mesure de pression $P_R$, signal qui est issu d'un capteur de mesure placé dans la chambre de combustion.

Dans ce premier exemple de réalisation, le dispositif de filtrage selon l'invention comprend une branche directe comprenant en série,

- un premier module soustracteur 201,
- un module statique non linéaire 202,
- un module multiplicateur 203, et
- un module intégrateur 204 générant le signal de pression filtré P.

Le dispositif de filtrage selon l'invention comprend une branche de retour formé par un module de réinjection 205 permettant de réinjecter dans le premier module soustracteur 201 le signal de pression filtré p disponible en sortie du module intégrateur 204.

Le premier module soustracteur 201 génère un signal de différence $\varepsilon$ correspondant à la différence entre le signal de mesure de pression $P_R$ et le signal de pression filtré P. Ce signal de différence de pression $\varepsilon$ subit une opération non linéaire au moyen du module non linéaire 202. Le but de ce module non linéaire est d'atténuer les oscillations de faibles amplitudes contenues dans le signal de différence $\varepsilon$. La fonction NL non linéaire est de préférence une fonction de seuillage doux ou de seuillage dur.

La fonction de seuillage doux NL(x) est définie mathématiquement par:

$$\begin{cases} NL(x) = x - \sigma & si \ x > \sigma \\ NL(x) = 0 & si \ -\sigma < x < \sigma \\ NL(x) = x + \sigma & si \ x < -\sigma \end{cases}$$

La fonction de seuillage dur NL(x) est définie mathématiquement par:

$$\begin{cases} NL(x) = x & si \ x > \sigma \\ NL(x) = 0 & si \ -\sigma < x < \sigma \\ NL(x) = x & si \ x < -\sigma \end{cases}$$

Après l'opération non linéaire, le signal de différence de pression filtré optionnellement ajusté par module multiplicateur 203 appliquant un gain K au signal en sortie du module non linéaire 202 avant d'être injecté dans un module intégrateur 204 dont la fonction est de générer en sortie un signal représentant l'intégration par rapport au temps du signal de différence de pression filtré. La sortie du module intégrateur 204 formée par le signal de pression filtré p est réinjectée via le module de réinjection 205 dans le premier module soustracteur 201 en entrée du dispositif de filtrage. La fonction de transfert de Laplace F(s) réalisée par le module de réinjection 205 est de préférence F(s)=1, réalisée comme un simple gain unitaire ou un simple rebouclage.

Le module multiplicateur 203 a été représenté sur la figure 2a en entrée du module intégrateur ; il pourrait toutefois être également placé en sortie du module intégrateur ou être placé dans la branche de retour en entrée du module de réinjection. Le gain peut en outre, selon les modes de réalisations choisis pour les différents modules 202, 203, 204 ou 205, être intégré également dans un de ces modules. L'essentiel est, de manière connue, que le gain statique de la fonction de transfert en boucle ouverte du dispositif de filtrage et celui de la branche de retour soient ajustés pour que les fréquences de coupure du filtre non linéaire vérifient le cahier des charges.

Du fait de la succession des modules connectés dans la branche directe et la configuration en boucle fermée par réinjection du signal de pression filtré P en sortie de l'intégrateur, le signal en entrée du module intégrateur 204 correspond, à un gain multiplicatif près, à la dérivée du signal de pression filtré. De ce fait, il n'est pas nécessaire d'utiliser des moyens supplémentaires, autres que ceux du dispositif de filtrage générant le signal de pression filtré, pour générer la dérivée du signal de pression filtré. Ceci rend la configuration de circuit selon l'invention particulièrement avantageuse et simple.

La figure 2b est un schéma-bloc d'un deuxième mode de réalisation du dispositif de filtrage du dispositif de commande d'un moteur 601 qui correspond à l'invention. Les modules 201 à 205 sont identiques à ceux du premier mode de réalisation et connectés de la même manière. En sus, ce mode de réalisation comprend un module soustracteur 206 effectuant la différence entre le signal de mesure de pression $P_r$ en entrée du dispositif de filtrage et le signal de pression filtré en sortie du module intégrateur 204. Le signal de différence obtenu en sortie du module soustracteur 206 est filtré au moyen d'un filtre passe-bas $F_1$ 207. La différence entre le signal de pression filtré P en sortie du module intégrateur 204 et le signal de sortie du filtre passe-bas est effectuée au moyen d'un module additionneur 208 générant un signal de pression filtré corrigé $P_{out}$ sous la forme de la somme entre ledit signal de pression filtré P et la sortie dudit module de filtrage passe bas 207. Ce deuxième mode de réalisation permet par la présence des éléments 206, 207 et 208 de compenser le décalage de tension introduit par la fonction non linéaire du module non linéaire 202. Une telle correction n'est cependant pas forcément indispensable si le décalage sur le signal de pression filtré n'est pas gênant pour les traitements qui seront appliqué au signal de pression filtré. Le premier mode de réalisation sera choisi de préférence au deuxième mode de réalisation dans tous les cas où l'on impose une simplicité de réalisation.

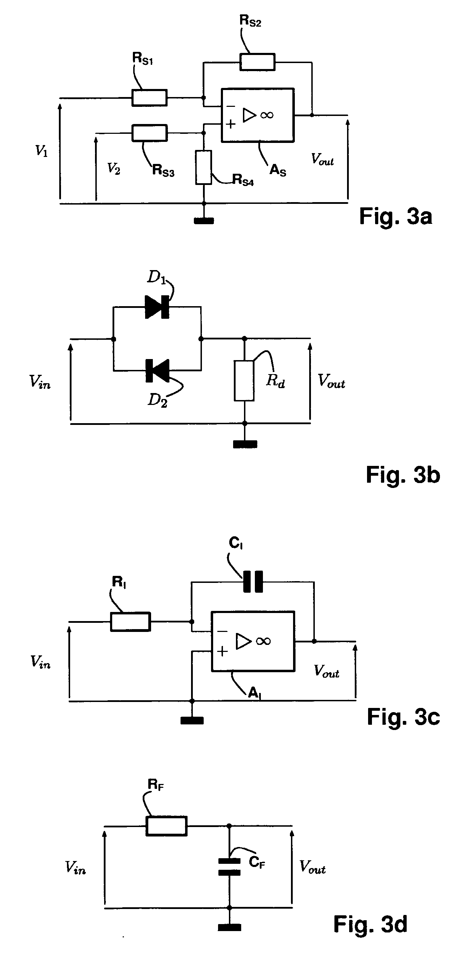

Des exemples de mode de réalisation des modules 201, 202, 204, 206, 207 du premier et deuxième exemple de réalisation sont donnés aux figures 3a à 3d.

A la figure 3a est donné un exemple de réalisation d'un module soustracteur 201 ou 206. Dans cet exemple, le module soustracteur est réalisé à partir d'un amplificateur opérationnel $A_S$ et de 4 résistances $R_{S1}$, $R_{S2}$, $R_{S3}$, $R_{S4}$ permettant d'ajuster le gain sur les entrées $V_1$, $V_2$ du module soustracteur. Sa fonction de transfert est donnée par la relation suivante :

$$V_{out} = \frac{R_{S2}}{R_{S1}}(V_2 - V_1) \text{ si } R_{S1} = R_{S3} \text{ et } R_{S2} = R_{S4}.$$

D'autres modes de réalisation du module soustracteur avec plus ou moins de résistances ou d'autre composants analogiques de base sont également envisageables.

A la figure 3b est donné un exemple de réalisation d'un module non linéaire 202. Dans cet exemple, qui est simple et présente cependant un très bon rapport coût/performance, le module non linéaire 202 est réalisé à partir d'une résistance $R_D$, permettant d'ajuster le gain de sortie du module, et de deux diodes $D_1$ et $D_2$ connectées en parallèle et tête-bêche. L'ensemble formé par les deux diodes en parallèle est placé en série avec la résistance $R_D$, la tension d'entrée étant connectée aux bornes de cette configuration série. La tension de sortie $V_{out}$ est elle prise aux bornes de la résistance $R_D$. La figure 4 illustre la fonction de transfert obtenue par un tel mode de réalisation. Il s'agit ici d'une fonction de seuillage doux. Cette solution a l'avantage d'être très simple et peu coûteuse. Un mode de réalisation plus complexe, permettant par exemple de réaliser une fonction de seuillage dur, est également envisageable.

A la figure 3c est donné un exemple de réalisation d'un module intégrateur 204. Dans cet exemple, le module intégrateur 204 est réalisé à partir d'une amplificateur opérationnel $A_I$, d'une résistance $R_I$ et d'une capacité $C_I$. D'autres modes de réalisation avec plus ou moins de résistances ou d'autre composants analogiques de base sont également envisageables. La fonction de transfert de Laplace d'un tel module intégrateur est de manière générale du type $G(s) = -\dfrac{1}{R_I C_I s}$. Un intégrateur passif dont la fonction de transfert est $G(s) = \dfrac{k}{1 + \tau s}$, où $\tau$ est une constante de temps, est également envisageable. Les modes de réalisation du premier type de fonction de transfert sont en général moins coûteux car ne nécessitent pas, contrairement aux formes du deuxième type, de module suiveur pour l'adaptation d'impédance du module intégrateur.

A la figure 3d est donné un exemple de réalisation d'un module de filtrage passe-bas 207. Dans cet exemple, le module de filtrage passe-bas est réalisé sous la forme d'un filtre passe-bas du premier ordre, à partir d'une résistance $R_F$ et d'une capacité $C_F$. Sa fonction de transfert de Laplace est

$$F(s) = \frac{1}{1 + R_F C_F s}$$

D'autres modes de réalisation avec plus de résistances ou de capacités sont également envisageables. Toutes les formes permettant d'obtenir un filtre passe-bas sont susceptibles de convenir, notamment les filtres d'ordre supérieur.

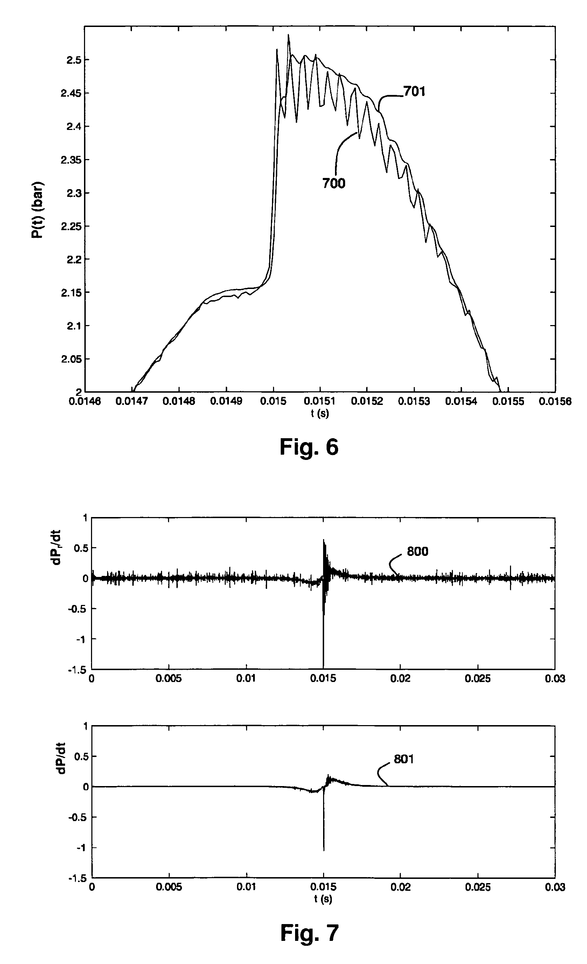

Les figures 6 et 7 illustrent respectivement l'allure en fonction du temps t des signaux de pression brut $P_R$ 700 et filtré P 701 et l'allure de la dérivée de ces mêmes signaux $dP_R/dt$ 800 et dP/dt 801. L'efficacité du dispositif de filtrage peut être constatée en même tant que la capacité de ce dispositif à conserver intact le front montant raide du signal de pression brut, front qui correspond au début de la combustion, au temps t=0,015s sur les figures 6 et 7. Une détermination précise du début de la combustion est donc possible sur la base du signal de pression filtré tel que généré par le procédé selon l'invention.

A partir de la dérivée dP/dt du signal de pression filtré et/ou du signal de pression filtré lui-même, on peut notamment déterminer un ou plusieurs paramètres caractéristiques de la combustion, notamment des paramètres utiles pour l'asservissement de la commande de combustion du moteur.

Par exemple le dégagement d'énergie apparent dQ/dt est déterminé selon la relation :

$$\left.\frac{dQ}{dt}\right|_t = \frac{1}{\gamma - 1} V(t) \left.\frac{dP}{dt}\right|_t + \frac{\gamma}{\gamma - 1} P(t) \left.\frac{dV}{dt}\right|_t \quad (1)$$

déjà décrite.

La date t0 de début de combustion est par exemple donnée par la formule :

$$t0 \quad tel\ que \quad \left.\frac{dQ}{dt}\right|_{t0} > St0$$

où St0 est un seuil prédéterminé.

La puissance d'émission sonore du moteur est, elle, déterminée directement à partir de la dérivée du signal de pression filtré dP/dt.

En entrée du bloc de commande 600 se présentent à la fois un signal ou vecteur de consigne $y_r$ et un signal ou vecteur d'asservissement x généré par le dispositif de filtrage 603 selon l'invention, c'est à dire le signal P de la figure 2a ou $P_{out}$ de la figure 2b selon le mode de réalisation choisi. Le vecteur de consigne $y_r$ comprend par exemple une valeur de consigne de la puissance du moteur et une valeur de consigne de la puissance d'émission sonore. Les valeurs de consigne sont de préférence des valeurs moyennes établies pour un cycle thermodynamique ou établies sur plusieurs cycles. Le vecteur d'asservissement x comprend par exemple la valeur instantanée de la pression filtrée p par le dispositif de filtrage selon l'invention ainsi que la dérivée dP/dt de cette valeur de pression, données à partir desquelles une valeur réelle de la puissance du moteur et une valeur réelle de la puissance d'émission sonore peuvent être déterminées en vue de leur comparaison aux valeurs correspondantes du vecteur de consigne. Sur la base de cette comparaison, le module de commande 600 détermine alors la commande à générer pour le moteur.

Par le procédé selon l'invention permettant le filtrage du signal de mesure de pression de la chambre de combustion, il devient ainsi possible de commander de manière précise et peu coûteuse la phase de combustion du cycle thermodynamique d'un moteur. Lorsqu'on ne dispose que d'un seul capteur de pression pour le moteur, l'asservissement sera effectué à partir du signal de mesure de pression qu'il fournit. Dans le cas d'un moteur multicylindre, et si l'on dispose de plusieurs capteurs pour détecter la pression dans plusieurs des cylindres, l'asservissement pourra être effectué en tenant compte des différents signaux de mesure de pressions filtrés chacun par le dispositif l'invention.

**Revendications**

1. Dispositif de commande d'un moteur (601) à combustion interne, comportant des moyens (600) de génération d'un signal de commande du moteur (601) à combustion interne, un capteur (602) pour la fourniture d'un signal de mesure de pression d'une chambre de combustion du moteur (601) à combustion interne, et un dispositif de filtrage (603) permettant de générer un signal de pression filtré, ledit dispositif de filtrage (603) étant réalisé à partir de composants électroniques analogiques et présentant une configuration en boucle fermée avec une partie directe (201, 202, 203, 204) et une partie de retour (205), la partie de retour comprenant un module de réinjection (205) dudit signal de pression filtré (P) et la partie directe de la boucle comprenant :

- un premier module soustracteur (201) apte à générer différence entre ledit signal de mesure de pression (P_r) et la sortie dudit module de réinjection (205),
- un module non linéaire statique (202) en sortie dudit module soustracteur, apte à atténuer les oscillations de faibles amplitudes contenues dans le signal de différence en sortie du dit module de réinjection,
- un module intégrateur (204) apte à générer ledit signal de pression filtré (P) par intégration à partir de la sortie dudit module non linéaire,

ledit dispositif de commande est **caractérisé en ce qu'**il comprend :

- un deuxième module soustracteur (206) apte à générer la différence entre ledit signal de mesure de pression (P_r) et ledit signal de pression filtré (P),
- un module de filtrage passe bas (207) en sortie dudit deuxième module soustracteur,
- un module additionneur (208) apte à générer un signal de pression filtré corrigé (P_out) sous la forme de la somme entre ledit signal de pression filtré (P) et la sortie dudit module de filtrage passe bas (207).

2. Dispositif selon la revendication 1, **caractérisé en ce que** le premier module soustracteur (201), le module non linéaire (202) et le module intégrateur (204) sont connectés en série dans la partie directe de la boucle de filtrage.

3. Dispositif selon l'une quelconque des revendications précédentes, **caractérisé en ce que** le signal à l'entrée du module intégrateur (204) est, à un gain multiplicatif près, le signal correspondant à la dérivée temporelle du signal de pression filtré (P).

4. Dispositif selon l'une quelconque des revendications précédentes, **caractérisé en ce qu'**il comprend au moins un module multiplicateur (203) permettant de régler le gain appliqué audit signal de pression filtré avant réinjection.

5. Dispositif selon l'une quelconque des revendications précédentes, **caractérisé en ce que** la fonction réalisée par ledit module non linéaire est une fonction de seuillage doux ou dur.

6. Dispositif selon l'une quelconque des revendications précédentes, **caractérisé en ce que** ledit module non linéaire (202) est réalisé à partir d'au moins une résistance et d'au moins deux diodes connectées tête-bêche et en parallèle.

7. Dispositif selon l'une quelconque des revendications précédentes, **caractérisé en ce que** ledit premier module soustracteur (201) ou le deuxième module soustracteur (206) ou le module additionneur (208) est réalisé à partir d'un amplificateur opérationnel et d'au moins une résistance.

8. Dispositif selon l'une quelconque des revendications précédentes, **caractérisé en ce que** ledit module intégrateur (204) est réalisé à partir d'au moins une résistance et une capacité.

9. Dispositif selon l'une quelconque des revendications précédentes, **caractérisé en ce que** ledit module de filtrage passe-bas (207) est réalisé à partir d'au moins une résistance et une capacité.

**Claims**

1. Device for controlling an internal combustion engine (601), comprising means (600) for generating a signal for controlling the internal combustion engine (601), a sensor (602) for supplying a measured pressure signal for the pressure measured in a measured combustion chamber of the internal combustion engine (601), and a filtering device (603) for generating a filtered pressure signal, said filtering device (603) being produced from analog electronic components and having a closed-loop configuration with a direct part (201, 202, 203, 204) and a return part (205), the return part comprising a reinjection module (205) for reinjecting said filtered pressure signal (P) and the direct part of the loop comprising:

- a first subtractor module (201) able to generate the difference between said measured pressure signal (P_r) and the output from said reinjection module (205),

- a static nonlinear module (202) on the output side of said subtractor module able to attenuate the low-amplitude fluctuations contained in the difference signal on the output of said reinjection module,
- an integrator module (204) able to generate said filtered pressure signal (P) by integrating the output of said nonlinear module,

which control device is **characterized in that** it comprises:

- a second subtractor module (206) able to generate the difference between said measured pressure signal ($P_r$) and said filtered pressure signal (P),
- a low-pass filtering module (207) on the output side of said second subtractor module,
- an adder module (208) able to generate a corrected filtered pressure signal ($P_{out}$) in the form of the sum of said filtered pressure signal (P) and the output from said low-pass filtering module (207).

2. Device according to Claim 1, **characterized in that** the first subtractor module (201), the nonlinear module (202) and the integrator module (204) are connected in series in the direct part of the filtering loop.

3. Device according to any one of the preceding claims, **characterized in that** the signal input into the integrator module (204) is, disregarding the gain factor, the signal corresponding to the derivative with respect to time of the filtered pressure signal (P).

4. Device according to any one of the preceding claims, **characterized in that** it comprises at least one multiplier module (203) for adjusting the gain applied to said filtered pressure signal before it is reinjected.

5. Device according to any one of the preceding claims, **characterized in that** the function performed by said nonlinear module is a soft or hard thresholding function.

6. Device according to any one of the preceding claims, **characterized in that** said nonlinear module (202) is made from at least one resistor and at least two diodes which are connected back-to-back and in parallel.

7. Device according to any one of the preceding claims, **characterized in that** said first subtractor module (201) or the second subtractor module (206) or the adder module (208) is made from an operational amplifier and at least one resistor.

8. Device according to any one of the preceding claims, **characterized in that** said integrator module (204) is made from at least one resistor and one capacitor.

9. Device according to any one of the preceding claims, **characterized in that** said low-pass filtering module (207) is made from at least one resistor and one capacitor.

**Patentansprüche**

1. Steuervorrichtung eines Verbrennungsmotors (601), die Mittel (600) zum Erzeugen eines Steuersignals des Verbrennungsmotors (601), einen Sensor (602) zur Lieferung eines Druckmessersignals einer Verbrennungskammer des Verbrennungsmotors (601) und eine Filtervorrichtung (603) aufweist, die es erlaubt, ein gefiltertes Drucksignal zu erzeugen, wobei die Filtervorrichtung (603) ausgehend von elektronischen analogen Bauteilen hergestellt ist und eine Konfiguration in geschlossener Schleife mit einem direkten Teil (201, 202, 203, 204) und einem Rücklaufteil (205) aufweist, wobei der Rücklaufteil ein Rückkopplungsmodul (205) des gefilterten Drucksignals (P) aufweist, und wobei der direkte Teil der Schleife Folgendes aufweist:

- ein erstes Subtrahiermodul (201), das geeignet ist, den Unterschied zwischen dem Druckmesssignal ($P_r$) und dem Ausgang des Rückkopplungsmoduls (205) zu erzeugen,
- ein nicht lineares statisches Modul (202) am Ausgang des Subtrahiermoduls, das geeignet ist, die Schwingungen mit geringen Amplituden zu dämpfen, die in dem Unterschiedsignal am Ausgang des Rückkopplungsmoduls enthalten sind,
- ein Integriermodul (204), das geeignet ist, das gefilterte Drucksignal (P) durch Integration ausgehend von dem Ausgang des nicht linearen Moduls zu erzeugen,

wobei die Steuervorrichtung **dadurch gekennzeichnet ist, dass** sie Folgendes aufweist:

- ein zweites Subtrahiermodul (206), das geeignet ist, den Unterschied zwischen dem Druckmesssignal ($P_r$) und dem gefilterten Drucksignal (P) zu erzeugen,
- ein Tiefpassfiltermodul (207) am Ausgang des zweiten Subtrahiermoduls,
- ein Addiermodul (208), das geeignet ist, ein korrigiertes gefiltertes Drucksignal ($P_{out}$) in der Form der Summe aus dem gefilterten Drucksignal (P) und dem Ausgang des Tiefpassfiltermoduls (207) zu erzeugen.

2. Vorrichtung nach Anspruch 1, **dadurch gekennzeichnet, dass** das erste Subtrahiermodul (201), das nicht lineare Modul (202) und das Integriermodul (204) in dem direkten Teil der Filterschleife in Serie geschaltet sind.

3. Vorrichtung nach einem der vorhergehenden Ansprüche, **dadurch gekennzeichnet, dass** das Signal am Eingang des Integriermoduls (204) bis auf eine multiplizierende Verstärkung das Signal ist, das der zeitlichen Drift des gefilterten Drucksignals (P) entspricht.

4. Vorrichtung nach einem der vorhergehenden Ansprüche, **dadurch gekennzeichnet, dass** sie wenigstens ein Multiplikationsmodul (203) aufweist, das es erlaubt, die Verstärkung einzustellen, die an das gefilterte Drucksignal vor der Rückkopplung angewandt wird.

5. Vorrichtung nach einem der vorhergehenden Ansprüche, **dadurch gekennzeichnet, dass** die von dem nicht linearen Modul ausgeführte Funktion eine Funktion des einfachen oder harten Schwellenwertbildens ist.

6. Vorrichtung nach einem der vorhergehenden Ansprüche, **dadurch gekennzeichnet, dass** das nicht lineare Modul (202) ausgehend von wenigstens einem Widerstand und wenigstens zwei Dioden, die auf den Kopf gestellt und parallel angeschlossen sind, hergestellt ist.

7. Vorrichtung nach einem der vorhergehenden Ansprüche, **dadurch gekennzeichnet, dass** das erste Subtrahiermodul (201) oder das zweite Subtrahiermodul (206) oder das Addiermodul (208) ausgehend von einem operativen Verstärker und wenigstens einem Widerstand hergestellt ist.

8. Vorrichtung nach einem der vorhergehenden Ansprüche, **dadurch gekennzeichnet, dass** das Integriermodul (204) ausgehend von wenigstens einem Widerstand und einer Kapazität hergestellt ist.

9. Vorrichtung nach einem der vorhergehenden Ansprüche, **dadurch gekennzeichnet, dass** das Tiefpassfiltermodul (207) ausgehend von wenigstens einem Widerstand und einer Kapazität hergestellt ist.

**Fig. 1a**

**Fig. 1b**

**Fig. 2a**

**Fig. 2b**

**Fig. 3a**

**Fig. 3b**

**Fig. 3c**

**Fig. 3d**

**Fig. 4**

**Fig. 5**

Fig. 6

Fig. 7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20030145829 A1
- EP 1209458 A1
- FR 0407060
- US 20030010101 A
- US 3654563 A
- US 4035734 A
- US 2931901 A
- FR 2385100